# EUROPÄISCHE PATENTSCHRIFT

(11) **EP 1 218 646 B1**
(45) Veröffentlichungstag und Bekanntmachung des Hinweises auf die Patenterteilung: **30.03.2005**
(21) Anmeldenummer: 00975854.1
(22) Anmeldetag: 15.09.2000
(51) Int. Cl.: F16D 65/16

(54) **BETÄTIGUNGSEINHEIT FÜR EINE ELEKTROMECHANISCH BETÄTIGBARE SCHEIBENBREMSE**
ACTUATING UNIT FOR AN ELECTROMECHANICALLY ACTUATED DISC BRAKE
UNITE D'ACTIONNEMENT POUR UN FREIN A DISQUE A ACTIONNEMENT ELECTROMECANIQUE

(30) Priorität: 23.09.1999 DE 19945543
(43) Veröffentlichungstag der Anmeldung: 03.07.2002
(73) Patentinhaber: Continental Teves AG & Co. OHG, 60488 Frankfurt am Main (DE); INA Wälzlager Schaeffler oHG, 91074 Herzogenaurach (DE)
(72) Erfinder: JUNGBECKER, Johann, 55576 Badenheim (DE); SCHMITT, Stefan, 65343 Eltville (DE); HOFFMANN, Oliver, 60486 Frankfurt am Main (DE); NELL, Joachim, 63452 Hanau (DE); NEUWIRTH, Ernst, 91074 Herzogenaurach (DE); BACKES, Wendelin, 63939 Wörth (DE)
(86) Internationale Anmeldenummer: PCT/EP2000/009044
(87) Internationale Veröffentlichungsnummer: WO 2001/021974

(56) Entgegenhaltungen:
- DE-A- 4 421 161
- DE-A- 19 853 383
- US-A- 4 836 338
- US-A- 5 829 557

## Beschreibung

Die Erfindung betrifft eine Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe zusammenwirkende Reibbeläge begrenzt verschiebbar angeordnet sind, wobei einer der Reibbeläge mittels eines Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, wobei die Betätigungseinheit aus einem Elektromotor sowie einem wirkungsmäßig zwischen dem Elektromotor und dem Betätigungselement angeordneten Untersetzungsgetriebe besteht, und wobei ein mit dem Elektromotor in Wirkverbindung stehender Freilauf vorgesehen ist, der die Funktion einer Feststellbremse erfüllt.

Eine derartige elektromechanische Betätigungseinheit ist aus der EP 0 402 421 B1 bekannt. Bei der vorbekannten Betätigungseinheit treibt der Elektromotor das Untersetzungsgetriebe über den Freilauf an. Der Freilauf, der eine reibschlüssige Drehmomentübertragung ermöglicht, verhindert beim Auftreten von Reaktionskräften eine Drehbewegung des Elektromotors in der seiner Betätigungsrichtung entgegengesetzten Richtung bzw. in der Löserichtung der Bremse und erfüllt somit die Funktion einer Feststellbremse.

Als nachteilig wird bei der vorbekannten Betätigungseinheit insbesondere das Funktionsprinzip des verwendeten Freilaufs angesehen, dessen Klemmwirkung bei einer hochfrequenten Anregung bzw. Schwingungsbelastung auf Grund eines Mikrogleitvorgangs in Belastungsrichtung langsam nachgibt, sc daß die erforderliche Haltekraft nicht gewährleistet werden kann. Dies bedeutet, daß ein derartiger Freilauf für eine sicherheitstechnische Anwendung, bei der unter allen Umständen die Haltewirkung aufrechterhalten werden muß, wie z. B. im Betrieb einer Feststellbremse, ungeeignet ist.

Es ist daher Aufgabe der vorliegenden Erfindung, eine elektromechanische Betätigungseinheit der eingangs genannten Gattung vorzuschlagen, bei der ein ungewolltes Lösen der Feststellbremse verhindert und somit eine Erhöhung ihrer Betriebssicherheit erreicht wird. Außerdem soll eine platzsparende, kompakte Bauweise der elektromechanischen Betätigungseinheit erreicht werden.

Diese Aufgabe wird erfindungsgemäß dadurch gelöst, daß der Freilauf derart ausgebildet ist, daß seine Klemmwirkung durch eine formschlüssige Drehmomentübertragung gewährleistet wird, und daß er im betätigten Zustand eine Drehbewegung eines Lagers verhindert,in dem der Rotor des Elektromotors gelagert ist. Das Lager kann dabei vorzugsweise als ein Kugellager, ein Nadellager oder ein Rollenlager ausgeführt sein.

Zur Konkretisierung des Erfindungsgedankens sieht eine vorteilhafte Weiterbildung der Erfindung vor, daß der Freilauf mit dem Lager eine Baugruppe bildet, wobei sowohl der Außen- als auch der Innenring des Lagers einseitig derart verlängert sind, daß sie mit dem Klemmkörper des Freilaufs eine formschlüssige Verbindung bilden. Durch diese Maßnahmen wird eine erhebliche Erhöhung der Integrationsdichte erreicht.

Eine vorteilhafte Weiterbildung des Erfindungsgegenstandes zeichnet sich dadurch aus, daß der Innenring des Lagers eine Profilierung aufweist, die eine formschlüssige Aufnahme des Klemmkörpers ermöglicht, während der Außenring mindestens eine radiale Ausnehmung sowie eine daran anschließende Schrage bzw. Rampe aufweist, die mit der Profilierung mindestens einen den Klemmkörper aufnehmenden Klemmspalt begrenzt.

Bei einer weiteren Ausgestaltung der Erfindung ist der Klemmkörper mittels eines Federelementes in Richtung auf die Ausnehmung zu vorgespannt . Das Federelement ist mit Vorteil als ein Federring oder eine Blattfeder ausgebildet.

Eine einfach realisierbare, zuverlässig arbeitende Betätigung der erfindungsgemäßen Feststellbremse wird nach einem weiteren Erfindungsmerkmal dadurch erreicht, daß der Freilauf mittels einer elektromagnetischen Betätigungseinrichtung betätigbar ist.

Die elektromagnetische Betätigungseinrichtung besteht dabei vorzugsweise aus einem Elektromagneten sowie einem Stößel, der mit dem Klemmkörper in kraftübertragenden Eingriff bringbar ist, wobei der Elektromagnet als bistabiler Elektromagnet ausgeführt ist.

Der Klemmkörper kann beispielsweise als eine Klemmrolle oder eine Kugel ausgebildet sein.

Eine besonders vorteilhafte Ausgestaltung des Erfindungsgegenstandes sieht vor, daß das Untersetzungsgetriebe als ein Kugelgewindetrieb ausgebildet ist, wobei das Betätigungselement durch die Gewindemutter des Kugelgewindetriebs gabildet ist.

Um eine erhebliche Reduzierung des vom Elektromotor aufzubringenden erforderlichen Antriebsmoments zu erreichen erfolgt die Kraftübertragung zwischen dem Elektromotor und dem Untersetzungsgetriebe mittels eines zweiten Untersetzungsgetriebes.

Bei einer vorteilhaften Weiterbildung des Erfindungsgegenstandes sind der Elektromotor, das (erste) Untersetzungsgetriebe sowie das zweite Untersetzungsgetriebe als mindestens zwei unabhängig handhabbare Baugruppen ausgebildet, so daß der Elektromotor außerhalb des Kraftflusses der Zuspannkraft angeordnet ist und seine Funktion durch Störeinflüsse nicht beeinträchtigt werden kann. Außerdem wird dadurch eine Entkopplung des zweiten Untersetzungsgetriebes vom (ersten) Untersetzungsgetriebe erreicht, so daß, insbesondere wenn das zweite Untersetzungsgetriebe als ein Planetengetriebe ausgebildet ist, eine gleiche Position des Rotors des Elektromotors gegenüber den Planetenrädern sowie der Planetenräder gegenüber dem Hohlrad gewährleistet werden kann. Durch die Ausbildung des zweiten Untersetzungsgetriebes als ein Planetengetriebe wird eine erhebliche Reduzierung des vom Elektromotor aufzubringenden erforderlichen Antriebsmoments erreicht, wobei das Planetengetriebe ein nicht reibungsbehaftetes Getriebe darstellt, in dem keine Formänderungsarbeit geleistet werden muß und mit dem bei geringem Bauraum ein hoher Wirkungsgrad erreichbar ist.

Dabei ist besonders vorteilhaft, wenn der Elektromotor, das erste Untersetzungsgetriebe sowie das zweite Untersetzungsgetriebe als je eine selbständig handhabbare Baugruppe ausgebildet sind. Eine derart aufgebaute elektromechanische Betätigungseinheit zeichnet sich durch einen hohen Wirkungsgrad, eine hervorragende Dynamik der Bremsbetätigung sowie eine extrem kompakte Bauweise aus, bei der hohe, massenbezogene Bremsmomente übertragen werden können. Außerdem können die modular ausgeführten Baugruppen separat gebaut und geprüft werden.

Bei einer vorteilhaften Weiterbildung des Erfindungsgegenstandes ist vorgesehen, daß das zweite Untersetzungsgetriebe auf der den Bremsbelägen abgewandten Seite des Elektromotors angeordnet ist. Durch diese Maßnahme wird eine Entkopplung des zweiten Untersetzungsgetriebes vom ersten Untersetzungsgetriebe konstruktiv ermöglicht, so daß eine Verformung des zweiten Untersetzungsgetriebes wirksam verhindert wird und innerhalb des Getriebes gleichbleibende Spiele eingehalten werden können.

Eine höhere Übersetzung wird bei einer weiteren Ausgestaltung des Erfindungsgegenstandes dadurch erreicht, daß das zweite Untersetzungsgetriebe als ein Planetengetriebe, vorzugsweise mit gestuften Planetenrädern ausgebildet ist. Es ist jedoch auch durchaus denkbar, das zweite Untersetzungsgetriebe als ein zweistufiges Differenzplanetengetriebe auszubilden. Bei der letztgenannten Getriebeart wird eine optimale Baulänge dadurch erreicht, daß ein größeres Sonnenrad verwendet werden kann.

Eine Entkopplung des Kraftflusses von der Antriebseinheit bzw. dem Elektromotor wird nach einem weiteren Erfindungsmerkmal dadurch gewährleistet, daß ein sich an einem den Kugelgewindetrieb aufnehmenden Gehäuse abstützendes, die Gewindemutter umgreifendes Führungsteil vorgesehen ist, an dem sich die Gewindespindel axial abstützt. Die axiale Abstützung der Gewindespindel erfolgt dabei unter Zwischenschaltung eines Axiallagers mittels eines radialen Bundes. Dadurch kann ein Lager mit kleinstem Durchmesser verwendet werden.

Außerdem ist es besonders vorteilhaft, wenn am Führungsteil Kraftmeßelemente vorgesehen sind, so daß Kraftmessungen am nicht mitbewegten Teil, das einer definierten Verformung unterliegt, vorgenommen werden können.

Durch eine zwischen der Gewindemutter und dem Führungsteil angeordnete elastische Dichtung bzw. Manschette wird ein wirksamer Schutz der Anordnung vor Verunreinigungen und Eindringen von Wasser erreicht.

Eine andere vorteilhafte Ausführung des Erfindungsgegenstandes sieht vor, daß das Sonnenrad des Planetengetriebes am Rotor ausgebildet ist, während die Planetenräder in einem mit der Gewindespindel in kraftübertragender Verbindung stehenden Planetenkäfig gelagert sind und aus einem mit dem Sonnenrad im Eingriff stehenden ersten Planetenrad größeren Durchmessers sowie einem mit einem Hohlrad im Eingriff stehenden zweiten Planetenrad kleineren Durchmessers bestehen.

Eine Bauraumoptimierung wird bei der vorhin erwähnten Ausführung dadurch erreicht, daß das Hohlrad des Planetengetriebes durch eine Innenverzahnung gebildet ist, die in einem Deckel ausgebildet ist, der ein Gehäuse des Planetengetriebes bildet und am Gehäuse des Elektromotors angeordnet ist.

Eine wesentliche Vereinfachung der Montage der erfindungsgemäßen Betätigungseinheit wird bei einer weiteren Ausgestaltung des Erfindungsgegenstandes dadurch erreicht, daß die Kraftübertragung zwischen dem Planetenkäfig und der Gewindespindel mittels einer formschlüssigen Steckverbindung erfolgt.

Eine kostengünstige Ausführung der erfindungsgemäßen Betätigungseinheit zeichnet sich dadurch aus, daß der Planetenkäfig im Deckel mittels eines Radiallagers gelagert ist. Ein derartiges Planetengetriebe ist einfach herstellbar und kann separat geprüft werden.

Dabei ist es sinnvoll, wenn die formschlüssige Steckverbindung torsionssteif, radial nachgiebig und biegeweich an den Planetenkäfig angekoppelt ist. Durch diese Maßnahme erfolgt eine wirksame Entkopplung von Störeinflüssen.

Die Gewindespindel kann vorzugsweise mehrteilig ausgeführt sein.

Eine weitere vorteilhafte Ausgestaltung des Erfindungsgegenstandes zeichnet sich dadurch aus, daß die Gewindemutter an ihrem dem ersten Reibbelag abgewandten Ende mit einem axialen Vorsprung versehen ist, der an einem an der Gewindespindel ebenfalls in axialer Richtung ausgebildeten, in Umfangsrichtung wirkenden Anschlag zur Anlage bringbar ist. Durch diese Maßnahme wird erreicht, daß insbesondere bei einem fehlerbehafteten Lösevorgang, bei dem die Gewindemutter bis auf Anschlag zurückgedreht wird, kein Verspannen Bzw. Klemmen des ersten Untersetzungsgetriebes eintritt.

Der Elektromotor kann bei weiteren vorteilhaften Ausführungen der Erfindung als ein permanentmagneterregter, elektronisch kommutierter Elektromotor (bürstenloser Gleichstrommotor) oder als ein geschalteter Reluktanzmotor (SR-Motor) ausgeführt sein.

Die erwähnten Motorarten sind zur Erzeugung hoher Drehmomente im Stillstand besonders geeignet.

Um den Motor der Betätigungseinheit elektronisch zu kommutieren, ist es notwendig, ein Lageerkennungssystem vorzusehen, das eine Erkennung der Position des Rotors des Elektromotors relativ zum Stator ermöglicht und vorzugsweise einen Hallsensor oder ein magnetoresistives Element aufweist.

Die Erfindung wird in der nachfolgenden Beschreibung eines Ausführungsbeispiels unter Bezugnahme auf die beiliegende Zeichnung näher erläutert. In der Zeichnung zeigen:
- Fig. 1: eine Ausführung der erfindungsgemäßen, elektromechanischen Betätigungseinheit im Axialschnitt,
- Fig. 2: die Ausführung der bei der Betätigungseinheit gemäß Fig. 1 verwendeten Feststellbremsvorrichtung,
- Fig. 3: die Feststellbremsvorrichtung gemäß Fig. 2 in Ruhestellung in gebrochener Darstellung, und
- Fig. 4: die Feststellbremsvorrichtung gemäß Fig. 2 in betätigter Stellung in gebrochener Darstellung.

Die in der Zeichnung dargestellte, elektromechanische Betätigungseinheit nach der Erfindung dient der Betätigung einer Schwimmsattel-Scheibenbremse, deren lediglich schematisch angedeuteter Bremssattel in einem nicht gezeigten feststehenden Halter verschiebbar gelagert ist. Ein Paar von Reibbelägen 4 und 5 ist im Bremssattel derart angeordnet, daß sie der linken und der rechten Seitenfläche einer Bremsscheibe 6 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet. Während der erste Reibbelag 4 mittels eines Betätigungselements 7 durch die Betätigungseinheit direkt mit der Bremsscheibe 6 in Eingriff bringbar ist, wird der zweite Reibbelag 5 durch die Wirkung einer bei der Betätigung der Anordnung vom Bremssattel aufgebrachten Reaktionskraft gegen die gegenüberliegende Seitenfläche der Bremsscheibe 6 gedrückt.

Die erfindungsgemäße Betätigungseinheit, die mittels nicht gezeigter Befestigungsmittel am Bremssattel angebracht ist, weist einen modularen Aufbau auf und besteht im wesentlichen aus drei selbständig handhabbaren Baugruppen bzw. Modulen, und zwar aus einer Antriebseinheit 1, einem den ersten Reibbelag 4 betätigenden ersten Untersetzungsgetriebe 2 und einem zwischen der Antriebseinheit 1 und dem ersten Untersetzungsgetriebe 2 wirkungsmäßig geschalteten zweiten Untersetzungsgetriebe 3.

Die vorhin erwähnte Antriebseinheit 1 besteht aus einem Elektromotor 10, der im dargestellten Beispiel als ein permanentmagneterregter, elektronisch kommutierter Motor ausgebildet ist, dessen Stator 9 unbeweglich in einem Motorgehäuse 8 angeordnet ist und dessen Rotor 11 durch einen ringförmigen Träger 13 gebildet ist, der mehrere Permanentmagnetsegmente 14 trägt. Zwischen dem Elektromotor 10 und dem vorhin erwähnten Betätigungselement 7 ist wirkungsmäßig das erste Untersetzungsgetriebe 2 angeordnet, das im gezeigten Beispiel als ein Kugelgewindetrieb 16 bis 21 ausgebildet ist, das in einem Getriebegehäuse 15 gelagert ist, das auch einteilig mit dem vorhin erwähnten Bremssattel ausgeführt sein kann. Der Kugelgewindetrieb besteht dabei aus einer Gewindemutter 16 sowie einer Gewindespindel 17, wobei zwischen der Gewindemutter 16 und der Gewindespindel 17 mehrere Kugeln 18 angeordnet sind, die bei einer Rotationsbewegung der Gewindespindel 17 umlaufen und die Gewindemutter 16 in eine axiale bzw. translatorische Bewegung versetzen. Die Gewindemutter 16 bildet dabei vorzugsweise das vorhin erwähnte Betätigungselement 7. Die vom Elektromotor 10 über das zweite Untersetzungsgetriebe 3 angetriebene Gewindespindel 17 ist dabei vorzugsweise dreiteilig ausgebildet und besteht aus einem mit der Gewindemutter 16 mittels der vorhin erwähnten Kugeln 18 im Eingriff stehenden, rohrförmigen ersten Spindelteil 19, einem ringförmigen zweiten Spindelteil 20 sowie einem dritten Spindelteil 21.

Die Anordnung ist dabei vorzugsweise derart getroffen, daß der Rotor 10 des Motors 11 unter Zwischenschaltung des zweiten Untersetzungsgetriebes 3 das dritte Spindelteil 21 antreibt, während die Gewindemutter 16 sich am ersten Reibbelag 4 abstüzt.

Eine Reduzierung des erforderlichen Motormoments wird bei der in der Zeichnung dargestellten Ausführung der Erfindung durch zweckmäßige Integration eines Planetengetriebes 30 - 34 erreicht, das das vorhin erwähnte zweite Untersetzungsgetriebe 3 bildet. Das Planetengetriebe, das wirkungsmäßig zwischen dem Rotor 11 und der Gewindespindel 17 angeordnet ist, besteht aus einem Sonnenrad 30, das vorzugsweise durch einen am Rotor 11 ausgebildeten, außen verzahnten Bereich 22 gebildet ist, mehreren gestuften Planetenrädern, von denen zwei dargestellt und mit den Bezugszeichen 31 und 32 versehen sind, sowie einem Hohlrad 33. Die gestuften Planetenräder 31, 32, die in einem Planetenkäfig 34 gelagert sind, weisen eine mit dem Sonnenrad 30 zusammenwirkende erste Stufe sowie eine mit dem Hohlrad 33 zusammenwirkende zweite Stufe auf, wobei die erste Stufe durch Zahnräder 31a, 32a größeren Durchmessers und die zweite Stufe durch Zahnräder 31b, 32b kleineren Durchmessers gebildet sind. Der vorhin erwähnte Planetenkäfig 34 ist dabei vorzugsweise derart ausgeführt, daß sein zwischen den Lagerstellen der Planetenräder 31, 32 und der Ankopplungsstelle der Gewindespindel 17 liegender Bereich sowohl ein geringes axiales als auch radiales Spiel sowie einen geringen Winkelversatz zuläßt und beispielsweise als eine Lamellenscheibe oder ein Faltenbalg ausgebildet ist. Das Hohlrad 33 wird durch einen innenverzahnten Bereich eines das Gehäuse des Planetengetriebes bildenden Deckels 23 gebildet.

Die vorhin erwähnte Gewindemutter 16 des Kugelgewindetriebs ist in einem topfförmigen Führungsteil 12 geführt bzw. gelagert. Die Lagerung der Gewindemutter 16 im Führungsteil 12 erfolgt sowohl in ihrem dem ersten Reibbelag 4 zugewandten Bereich mittels eines im Führungsteil 12 angeordneten ersten Gleitringes 28 als auch in ihrem dem Reibbelag 4 abgewandten Endbereich mittels eines auf der Gewindemutter 16 angeordneten zweiten Gleitringes 29.

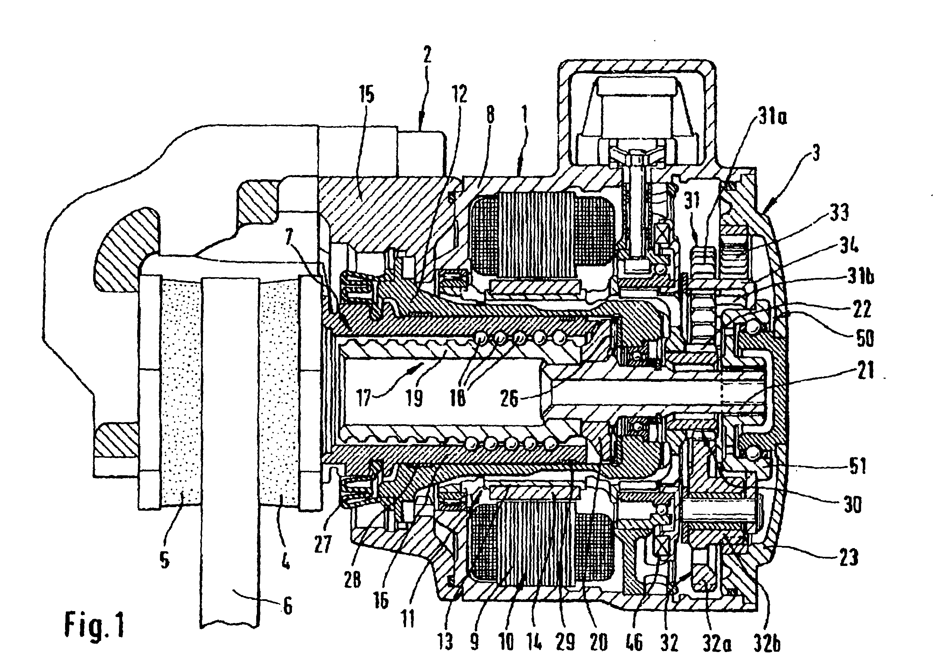

Weiterhin ist Fig. 1 zu entnehmen, daß das zweite ringförmige Spindelteil 20 sich an einem innerhalb des Führungsteils 12 angeordneten Axiallager 26 abstützt, während das dritte Spindelteil 21 mittels einer formschlüssigen Steckverbindung mit dem Planetenkäfig 34 des zweiten Untersetzungsgetriebes 3 verbunden ist.
Zu diesem Zweck ist das Ende des dritten Spindelteiles 21 beispielsweise als eine Torx-Verbindung oder ein Sechskant ausgebildet, der in eine entsprechend geformte Öffnung im Planetenkäfig 34 hineingeschoben wird. Dabei ist es besonders vorteilhaft, wenn die formschlüssige Steckverbindung torsionssteif, radial nachgiebig und biegeweich an den Planetenkafig 34 angekoppelt ist. Die Ankopplung erfolgt mittels eines Außenringes 51 eines im Deckel 23 vorgesehenen Radiallagers 50. Eine zwischen der Gewindemutter 16 und dem Führungsteil 12 eingespannte elastische Dichtung bzw. Dichtmanschette 27 verhindert ein Eindrigen von Verunreinigungen ins Innere des Kugelgewindetriebs.

Außerdem ist es für eine einwandfreie Funktion der erfindungsgemäßen Betätigungseinheit sinnvoll, wenn die Gewindemutter 16 an ihrem dem Reibbelag 4 abgewandten Ende mit einem nicht gezeigten axialen Vorsprung versehen ist, der bei ihrem Zurückstellen mit einem am Umfang des zweiten Spindelteiles 20 ausgebildeten Anschlag zusammenwirkt. Durch Abstützen einer Seitenfläche des Vorsprungs am Anschlag wird ein weiteres Zurückstellen der Gewindemutter 16 wirksam verhindert, so daß kein Verklemmen der beiden Teile 16, 20 eintreten kann.

Um die aktuelle Position des Rotors 11 zu ermitteln ist ein nicht näher dargestelltes Lageerkennungssystem 46 vorgesehen. Die Lageinformation wird dann mittels eines Hallsensors oder eines magnetoresistiven Elements ermittelt.

Um schließlich die Funktion einer Feststellbremse realisieren zu können weist die erfindungsgemäße Betätigungseinheit elektromechanische Mittel auf, die, mit dem Rotor 11 des Elektromotors 10 zusammenwirkend, sein Verriegeln ermöglichen. Im gezeigten Ausführungsbeispiel werden die elektromechanischen Mittel durch einen elektromagnetisch betätigbaren Freilauf gebildet, der das Bezugszeichen 35 trägt und mit einem Radiallager 24 zusammenwirkt, in dem der Rotor 11 gelagert ist. Die dem Freilauf 35 zugeordnete elektrische Aktuatorik ist in der Art eines mechanischen Flip-Flops aufgebaut, dessen Zustand bei jeder kurzen Bestromung geändert wird.

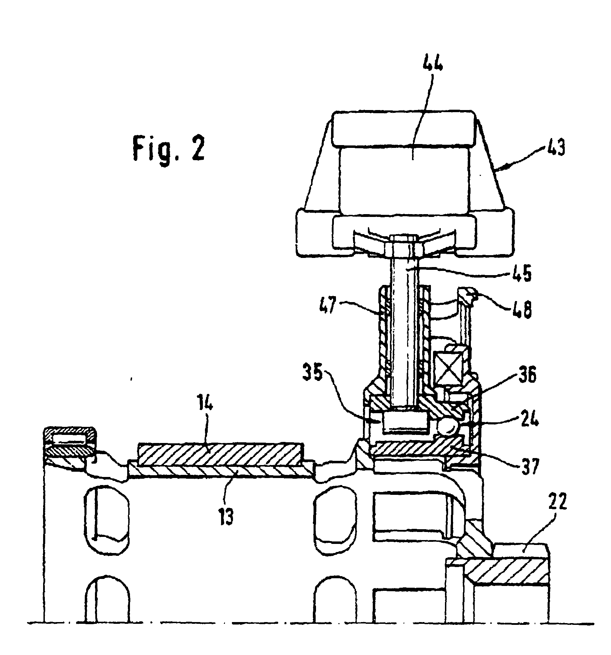

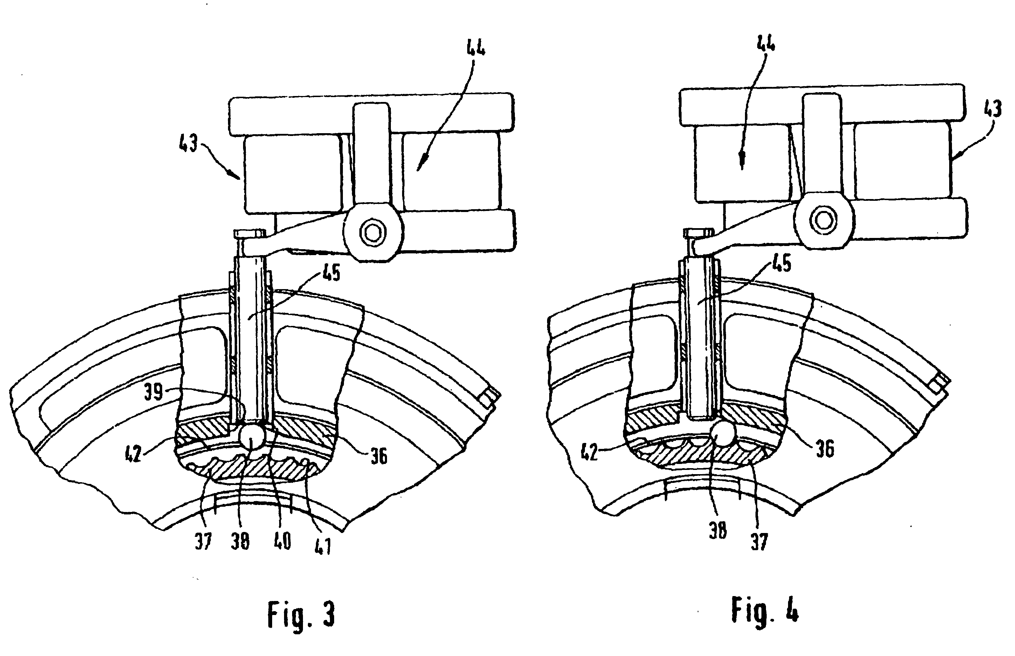

Wie insbesondere Fig. 2 bis 4 zu entnehmen ist, sind wesentliche Teile des Freilaufs 35 im oben erwähnten Radiallager 24 integriert. Zu diesem Zweck sind sowohl der Außenring 36 als auch der Innenring 37 des Radiallagers 24 einseitig derart verlängert, daß sie einen Ringraum begrenzen, der einen Klemmkörper 38 aufnimmt, wobei durch die besondere Gestaltung des verlängerten Bereichs der Lagerringe 36, 37 eine formschlüssige Verbindung zwischen den Lagerringen 36, 37 und dem Klemmkörper 38 gewährleistet ist. Der Außenring 36 weist dabei vorzugsweise in seinem mit dem Klemmkörper 38 zusammenwirkenden Bereich eine radiale Ausnehmung 39 auf, die einseitig durch eine Schräge bzw. Rampe 40 begrenzt wird, während der Innenring 37 mit einer Profilierung 41 versehen ist, die der Kontur des Klemmkörpers 38 entspricht und mit der Ausnehmung einen Klemmspalt begrenzt. Der Klemmkörper 38, der als eine Klemmrolle oder kugelförmig ausgeführt werden kann, wird auf die vorhin erwähnte Ausnehmung 39 zu mittels eines ringförmigen Federelementes 42 vorgespannt.

Der Betätigung des Freilaufs 36 dient eine elektromagnetische Betätigungseinrichtung, die im gezeigten Beispiel das Bezugszeichen 43 trägt. Die Betätigungseinrichtung 43 besteht im wesentlichen aus einem bistabilen Elektromagneten 44 sowie einem Stößel 45, der mit dem Anker des Elektromagneten 44 zusammenwirkt und beim Aktivieren des Elektromagneten 44 den Klemmkörper 38 radial verstellt. Der Stößel 45 wird in einer rohrförmigen Führung 47 geführt, die an einem den Lager-Außenring 36 aufnehmenden, im Motorgehäuse 8 angeordneten ringförmigen Aufnahmeteil 48 angeformt ist.

### Es ist die folgende Funktionsabfolge vorgesehen:

Zunächst wird die elektromechanische Bremse auf das notwendige Spannkraftniveau zugespannt. Der Rotor 11 bzw. der Lager-Innenring 37 werden beim Zuspannen entgegen der Klemmrichtung des Freilaufs 35, d.h., in der Zeichnung nach rechts, bewegt. Wenn bei der Betätigung der Feststellbremse der Klemmkörper 38 durch Aktivieren des Elektromagneten 44 in Richtung auf die Profilierung 41 zu verstellt wird, rollt er auf der vorhin erwähnten Rampe 40 in den sich verjüngenden Klemmspalt. Wird nun der dem Elektromotor 10 zugeführte Strom reduziert, so versucht die Federkraft der zugespannten Bremse den Rotor 11 bzw. den Lager-Innenring 37 in Klemmrichtung zu verdrehen. Dadurch wird die Feststellbremse sicher verriegelt. Die betätigte Stellung der Feststellbremse ist in Fig. 4 dargestellt.

Zum Lösen muß der Elektromotor 10 die Bremse nur ein wenig zuspannen und der Elektromagnet 44 muß wiederum einmalig betätigt werden, um den Stößel 45 nach oben zu bewegen. Der dadurch entlastete Klemmkörper 38 wird durch die Kraft des ihn vorspannenden Federelementes 42 in die Ausnehmung 39 des Lager-Außenringes 36 gedrückt und der Rotor 11 ist in beiden Richtungen frei drehbar.

Im Rahmen der vorliegenden Erfindung sind selbstverständlich auch zahlreiche Modifikationen denkbar. So kann z. B. der als Antriebseinheit 1 dienende Elektromotor als ein geschalteter Reluktanzmotor (SR-Motor) ausgeführt werden. Vorstellbar sind auch andere Ausführungen des Planetengetriebes, wie etwa ein zweistufiges Differenzplanetengetriebe oder ein Getriebe, dessen Planetenräder mit ihrer ersten Stufe mit einem Sonnenrad und mit ihrer zweiten Stufe unter Zwischenschaltung je eines Stirnrades mit einem Hohlrad im Eingriff stehen. Denkbar sind selbstverständlich auch Getriebe, die mittels eines verformbaren, gezahnten Ringes und einer Exzentrizität große Untersetzungen erzielen.

Auch der Lager-Innenring ist mit verschiedensten Profilierungen vorstellbar. Wichtig ist lediglich, daß der Klemmkörper eine sichere Lage einnehmen kann. Das den Klemmkörper vorspannende ringförmige Federelement braucht nicht den ganzen Umfang zu umspannen. Es kann auch eine Blattfeder vorgesehen werden, die nur in der Nähe des Klemmkörpers verankert wird. Denkbar ist auch eine Ausführung des Federelementes als sogenannte "Übertotpunktfeder" (Knackfrosch).

Damit schließlich durch die Klemmwirkung keine Querkräfte oder -verformungen wirken, können auch mehrere Klemmkörper regelmäßig am Umfang angeordnet werden.

### Bezugszeichenliste

- 1: Antriebseinheit
- 2: Untersetzungsgetriebe
- 3: Untersetzungsgetriebe
- 4: Reibbelag
- 5: Reibbelag
- 6: Bremsscheibe
- 7: Betätigungselement
- 8: Motorgehäuse
- 9: Stator
- 10: Elektromotor
- 11: Rotor
- 12: Führungsteil
- 13: Träger
- 14: Permanentmagnetsegment
- 15: Getriebegehäuse
- 16: Gewindemutter
- 17: Gewindespindel
- 18: Kugel
- 19: Spindelteil
- 20: Spindelteil
- 21: Spindelteil
- 22: Bereich
- 23: Deckel
- 24: Radiallager
- 25 26: Axiallager
- 27: Dichtung
- 28: Gleitring
- 29: Gleitring
- 30: Sonnenrad
- 31: Planetenrad
- 31a: Planetenrad
- 31b: Planetenrad
- 32: Planetenrad
- 32a: Planetenrad
- 32b: Planetenrad
- 33: Hohlrad
- 34: Planetenkäfig
- 35: Freilauf
- 36: Außenring
- 37: Innenring
- 38: Klemmkörper
- 39: Ausnehmung
- 40: Schräge
- 41: Profilierung
- 42: Federelement
- 43: Betätigungseinrichtung
- 44: Elektromagnet
- 45: Stößel
- 46: Lageerkennungssystem
- 47: Führung
- 48: Aufnahmeteil
- 49 50: Radiallager
- 51: Außenring

## Patentansprüche

1. Betätigungseinheit für eine elektromechanisch betätigbare Scheibenbremse für Kraftfahrzeuge, die an einem Bremssattel angeordnet ist, in dem zwei mit je einer Seitenfläche einer Bremsscheibe (6) zusammenwirkende Reibbeläge (4,5) begrenzt verschiebbar angeordnet sind, wobei einer (4) der Reibbeläge (4,5) mittels eines Betätigungselementes (15) durch die Betätigungseinheit direkt und der andere Reibbelag (5) durch die Wirkung einer vom Bremssattel aufgebrachten Reaktionskraft mit der Bremsscheibe (6) in Eingriff bringbar ist, wobei die Betätigungseinheit aus einem Elektromotor (10) sowie einem wirkungsmäßig zwischen dem Elektromotor (10) und dem Betätigungselement (15) angeordneten Untersetzungsgetriebe (2) besteht, und wobei ein mit dem Elektromotor (10) in Wirkverbindung stehender Freilauf (35) vorgesehen ist, der die Funktion einer Feststellbremse erfüllt, **dadurch gekennzeichnet, daß** der Freilauf (35) derart ausgebildet ist, daß seine Klemmwirkung durch eine formschlüssige Drehmomentübertragung gewährleistet wird, und daß er im betätigten Zustand eine Drehbewegung eines Lagers (24) verhindert in dem der Rotor (11) des Elektromotors (10) gelagert ist.

2. Betätigungseinheit nach Anspruch 1 **dadurch gekennzeichnet, daß** der Freilauf (35) mit dem Lager (24) eine Baugruppe bildet.

3. Betätigungseinheit nach Anspruch 2 **dadurch gekennzeichnet, daß** sowohl der Außen- (36) als auch der Innenring (37) des Lagers (24) einseitig derart verlängert sind, daß sie mit dem Klemmkörper (38) des Freilaufs (35) eine formschlüssige Verbindung bilden.

4. Betätigungseinheit nach Anspruch 3 **dadurch gekennzeichnet, daß** der Innenring (37) des Lagers (24) eine Profilierung (41) aufweist, die eine formschlüssige Aufnahme des Klemmkörpers (38) ermöglicht, während der Außenring (36) mindestens eine radiale Ausnehmung (39) sowie eine daran anschließende Schräge bzw. Rampe (40) aufweist, die mit der Profilierung (41) mindestens einen den Klemmkörper (38) aufnehmenden Klemmspalt begrenzt.

5. Betätigungseinheit nach Anspruch 4 **dadurch gekennzeichnet, daß** der Klemmkörper (38) mittels eines Federelementes (42) in Richtung auf die Ausnehmung (39) zu vorgespannt ist.

6. Betätigungseinheit nach Anspruch 5 **dadurch gekennzeichnet, daß** das Federelement (42) als ein Federring ausgebildet ist.

7. Betätigungseinheit nach Anspruch 5 **dadurch gekennzeichnet, daß** das Federelement als eine Blattfeder ausgebildet ist.

8. Betätigungseinheit nach einem der Ansprüche 1 bis 7 **dadurch gekennzeichnet, daß** der Freilauf (35) mittels einer elektromagnetischen Betätigungseinrichtung (43) betätigbar ist.

9. Betätigungseinheit nach Anspruch 8 **dadurch gekennzeichnet, daß** die elektromagnetische Betätigungseinrichtung (43) aus einem Elektromagneten (44) sowie einem Stößel (45) erfolgt, der mit dem Klemmkörper (38) in kraftübertragenden Eingriff bringbar ist.

10. Betätigungseinheit nach Anspruch 9 **dadurch gekennzeichnet, daß** der Elektromagnet (44) als bistabiler Elektromagnet ausgeführt ist.

11. Betätigungseinheit nach einem der vorhergehenden Ansprüche **dadurch gekennzeichnet, daß** der Klemmkörper (38) als eine Klemmrolle ausgebildet ist.

12. Betätigungseinheit nach einem der vorhergehenden Ansprüche **dadurch gekennzeichnet, daß** der Klemmkörper kugelförmig ausgeführt ist.

13. Betätigungseinheit nach einem der vorhergehenden Ansprüche **dadurch gekennzeichnet, daß** das Lager (24) als ein Kugellager, ein Nadellager oder ein Rollenlager ausgeführt ist.

14. Betätigungseinheit nach einem der vorhergehenden Ansprüche **dadurch gekennzeichnet, daß** zwischen dem Elektromotor (11) und dem Untersetzungsgetriebe (2) ein zweites Untersetzungsgetriebe (3) vorgesehen ist.

15. Betätigungseinheit nach Anspruch 14 **dadurch gekennzeichnet, daß** der Elektromotor (11), das (erste) Untersetzungsgetriebe (2) sowie das zweite Untersetzungsgetriebe (3) als mindestens zwei unabhängig handhabbare Baugruppen ausgebildet sind.

16. Betätigungseinheit nach Anspruch 14 **dadurch gekennzeichnet, daß** der Elektromotor (11), das (erste) Untersetzungsgetriebe (2) sowie das zweite Untersetzungsgetriebe (3) als je eine selbständig handhabbare Baugruppe ausgebildet sind.

17. Betätigungseinheit nach einem der vorhergehenden Ansprüche **dadurch gekennzeichnet, daß** das (erste) Untersetzungsgetriebe (2) als ein Kugelgewindetrieb (16-18) ausgebildet ist.

18. Betätigungseinheit nach Anspruch 17 **dadurch gekennzeichnet, daß** das Betätigungselement (7) durch die Gewindemutter (16) des Kugelgewindetriebs (16-18) gebildet ist.

19. Betätigungseinheit nach einem der vorhergehenden Ansprüche **dadurch gekennzeichnet, daß** das zweite Untersetzungsgetriebe (3) auf der den Bremsbelägen (4,5) abgewandten Seite des Elektromotors (10) angeordnet ist.

20. Betätigungseinheit nach einem der vorhergehenden Ansprüche 14 bis 19 **dadurch gekennzeichnet, daß** das zweite Untersetzungsgetriebe (3) als ein Planetengetriebe ausgebildet ist.

21. Betätigungseinheit nach Anspruch 20, **dadurch gekennzeichnet, daß** das zweite Untersetzungsgetriebe (3) als ein Planetengetriebe mit gestuften Planetenrädern (31,32) ausgebildet ist.

22. Betätigungseinheit nach einem der Ansprüche 17 bis 20 **dadurch gekennzeichnet, daß** ein die Gewindemutter (16) des Kugelgewindetriebs (16-18) umgreifendes Führungsteil (12) vorgesehen ist, das sich an dem den Kugelgewindetrieb aufnehmenden Getriebegehäuse (15) abstützt und an dem sich die Gewindespindel (17) ihrerseits axial abstützt.

23. Betätigungseinheit nach Anspruch 22 **dadurch gekennzeichnet, daß** die axiale Abstützung der Gewindespindel (17) unter Zwischenschaltung eines Axiallagers (26) mittels eines radialen Bundes (14) erfolgt.

24. Betätigungseinheit nach Anspruch 22 oder 23 **dadurch gekennzeichnet, daß** am Führungsteil Kraftmeßelemente vorgesehen sind.

25. Betätigungseinheit nach einem der vorhergehenden Ansprüche 17 bis 24 **dadurch gekennzeichnet, daß** zwischen der Gewindemutter (16) und dem Führungsteil (12) eine elastische Dichtung (27) vorgesehen ist.

26. Betätigungseinheit nach einem der Ansprüche 20 bis 25 **dadurch gekennzeichnet, daß** das Sonnenrad (30) des Planetengetriebes am Rotor (11) ausgebildet ist, während die Planetenräder (31,32) in einem mit der Gewindespindel (17) in kraftübertragender Verbindung stehenden Planetenkäfig (34) gelagert sind und aus je einem mit dem Sonnenrad (30) im Eingriff stehenden ersten Planetenrad (31a,32a) größeren Durchmessers sowie je einem mit einem Hohlrad (33) im Eingriff stehenden zweiten Planetenrad (31b,32b) kleineren Durchmessers bestehen.

27. Betätigungseinheit nach einem der Ansprüche 20 bis 26 **dadurch gekennzeichnet, daß** das Hohlrad (33) des Planetengetriebes durch eine Innenverzahnung gebildet ist, die in einem Deckel (23) ausgebildet ist, der ein Gehäuse des Planetengetriebes bildet und am Motorgehäuse (8) des Elektromotors (10) angeordnet ist.

28. Betätigungseinheit nach einem der Ansprüche 20 bis 27 **dadurch gekennzeichnet, daß** die Kraftübertragung zwischen dem Planetenkäfig (34) und der Gewindespindel (17) mittels einer formschlüssigen Steckverbindung erfolgt.

29. Betätigungseinheit nach einem der Ansprüche 20 bis 28 **dadurch gekennzeichnet, daß** der Planetenkäfig (34) im Deckel (23) mittels eines Radiallagers (50) gelagert ist.

30. Betätigungseinheit nach Anspruch 28 oder 29 **dadurch gekennzeichnet, daß** die formschlüssige Steckverbindung torsionssteif, radial nachgiebig und biegeweich an den Planetenkäfig (34) angekoppelt ist.

31. Betätigungseinheit nach einem der vorhergehenden Ansprüche 18 bis 30 **dadurch gekennzeichnet**, da die Gewindespindel (17) mehrteilig ausgeführt ist.

32. Betätigungseinheit nach einem der vorhergehenden Ansprüche 18 bis 31 **dadurch gekennzeichnet, daß** die Gewindemutter (16) an ihrem dem ersten Reibbelag (4) abgewandten Ende mit einem Vorsprung versehen ist, der an einem an der Gewindespindel (17) ausgebildeten, in Umfangsrichtung wirkenden Anschlag zur Anlage bringbar ist.

33. Betätigungseinheit nach einem der vorhergehenden Ansprüche, **dadurch gekennzeichnet, daß** der Elektromotor (11) als ein permanentmagneterregter, elektronisch kommutierter Elektromotor ausgeführt ist.

34. Betätigungseinheit nach einem der vorhergehenden Anspruche 1 bis 32, **dadurch gekennzeichnet, daß** der Elektromotor als ein geschalteter Reluktanzmotor ausgeführt ist.

35. Betätigungseinheit nach einem der vorhergehenden Ansprüche **dadurch gekennzeichnet, daß** ein Lageerkennungssystem (46) vorgesehen ist, das eine Erkennung der Position des Rotors (11) ermöglicht.

36. Betätigungseinheit nach Anspruch 35 **dadurch gekennzeichnet, daß** das Lageerkennungssystem (46) einen Hallsensor aufweist.

37. Betätigungseinheit nach Anspruch 35 **dadurch gekennzeichnet, daß** das Lageerkennungssystem (46) ein magneto-resistives Element aufweist.

## Claims

1. Actuating unit for an electromechanically actuated disc brake for automotive vehicles that is mounted on a brake caliper in which two friction linings (4, 5) are arranged that interact with each one lateral surface of a brake disc (6) so as to be slidable within limits, wherein one (4) of the friction linings (4, 5) is directly movable into engagement with the brake disc by means of an actuating element (15), through the actuating unit, and the other friction lining (5) is movable into engagement with the brake disc (6) by the effect of a reaction force generated by the brake caliper, wherein the actuating unit is comprised of an electric motor (10) and a reducing gear (2) interposed between the electric motor (10) and the actuating element (15), and wherein a freewheel mechanism (35) is provided that is in interaction with the electric motor (10) and has the function of a parking brake,
**characterized in that** the freewheel mechanism (35) is configured so that its clamping effect is ensured by a form-locking torque transmission, and **in that**, in its actuated state, it prevents a rotational movement of a bearing (24) in which the rotor (11) of the electric motor (10) is mounted.

2. Actuating unit as claimed in claim 1,
**characterized in that** the freewheel mechanism (35) along with the bearing (24) forms a subassembly.

3. Actuating unit as claimed in claim 2,
**characterized in that** both the outside ring (36) and the inside ring (37) of the bearing (24) are extended on one side in such a fashion that they establish a form-locking engagement with the clamping element (38) of the freewheel mechanism (35).

4. Actuating unit as claimed in claim 3,
**characterized in that** the inside ring (37) of the bearing (24) has a profiling (41) which permits a form-locking accommodation of the clamping element (38), and the outside ring (36) has at least one radial recess (39) and a subsequent slope or ramp (40) which, along with the profiling (41), limits at least one clamping slot in which the clamping element (38) is received.

5. Actuating unit as claimed in claim 4,
**characterized in that** the clamping element (38) is biassed in the direction of the recess (39) by means of a spring element (42).

6. Actuating unit as claimed in claim 5,
**characterized in that** the spring element (42) is configured as a circlip.

7. Actuating unit as claimed in claim 5,
**characterized in that** the spring element is configured as a leaf spring.

8. Actuating unit as claimed in any one of claims 1 to 7,
**characterized in that** the freewheel mechanism (35) is operable by means of an electromagnetic actuating unit (43).

9. Actuating unit as claimed in claim 8,
**characterized in that** the electromagnetic actuating unit (43) is comprised of an electromagnet (44) and a tappet (45) which is movable into a force-transmitting engagement with the clamping element (38).

10. Actuating unit as claimed in claim 9,
**characterized in that** the electromagnet (44) is designed as a bistable electromagnet.

11. Actuating unit as claimed in any one of the preceding claims,
**characterized in that** the clamping element (38) is designed as a jamming roller.

12. Actuating unit as claimed in any one of the preceding claims,
**characterized in that** the clamping element has the shape of a ball.

13. Actuating unit as claimed in any one of the preceding claims,
**characterized in that** the bearing (24) is designed as a ball bearing, a needle bearing, or a roller bearing.

14. Actuating unit as claimed in any one of the preceding claims,
**characterized in that** a second reducing gear (3) is provided between the electric motor (11) and the reducing gear (2).

15. Actuating unit as claimed in claim 14,
**characterized in that** the electric motor (11), the (first) reducing gear (2), and the second reducing gear (3) are designed as at least two independent subassemblies.

16. Actuating unit as claimed in claim 14,
**characterized in that** the electric motor (11), the (first) reducing gear (2), and the second reducing gear (3) are designed as each one independent subassembly.

17. Actuating unit as claimed in any one of the preceding claims,
**characterized in that** the (first) reducing gear (2) is configured as a ball-and-thread drive assembly (16-18).

18. Actuating unit as claimed in claim 17,
**characterized in that** the actuating element (7) is formed by the threaded nut (16) of the ball-and-thread drive assembly (16-18).

19. Actuating unit as claimed in any one of the preceding claims,
**characterized in that** the second reducing gear (3) is arranged on the side of the electric motor (10) remote from the brake linings (4, 5).

20. Actuating unit as claimed in any one of the preceding claims 14 to 19,
**characterized in that** the second reducing gear (3) is configured as a planetary gear.

21. Actuating unit as claimed in claim 20,
**characterized in that** the second reducing gear (3) is configured as a planetary gear with stepped planet wheels (31, 32).

22. Actuating unit as claimed in any one of claims 17 to 20,
**characterized in that** there is provision of a guide member (12) which embraces the threaded nut (16) of the ball-and-thread drive assembly (16-18), which is supported on a gearbox (15) that accommodates the ball-and-thread drive assembly, and on which the threaded spindle (17), in turn, is axially supported.

23. Actuating unit as claimed in claim 22,
**characterized in that** the axial support of the threaded spindle (17) is carried out by the intermediary of an axial bearing (26) by means of a radial collar (14).

24. Actuating unit as claimed in claim 22 or 23,
**characterized in that** force-measuring elements are provided on the guide member.

25. Actuating unit as claimed in any one of the preceding claims 17 to 24,
**characterized in that** an elastic seal (27) is interposed between the threaded nut (16) and the guide member (12).

26. Actuating unit as claimed in any one of claims 20 to 25,
**characterized in that** the sun wheel (30) of the planetary gear is designed on the rotor (11), while the planet wheels (31, 32) are mounted in a planet cage (34) that is in a force-transmitting connection with the threaded spindle (17) and are comprised of each one first planet wheel (31a,32a) of large diameter that is in engagement with the sun wheel (30) and each one second planet wheel (31b, 32b) of small diameter that is in engagement with a ring gear (33).

27. Actuating unit as claimed in any one of claims 20 to 26,
**characterized in that** the ring gear (33) of the planetary gear is formed of an internal toothing in a cover (23) which represents a case of the planetary gear and is mounted on the casing (8) of the electric motor (10).

28. Actuating unit as claimed in any one of claims 20 to 27,
**characterized in that** the transmission of force between the planet cage (34) and the threaded spindle (17) is effected by means of a form-locking plug coupling.

29. Actuating unit as claimed in any one of claims 20 to 28,
**characterized in that** the planet cage (34) is mounted in the cover (23) by means of a radial bearing (50).

30. Actuating unit as claimed in claim 28 or 29,
**characterized in that** the form-locking plug coupling is connected to the planet cage (34) in a torsion-proof, radially yielding and flexible fashion.

31. Actuating unit as claimed in any one of the preceding claims 18 to 30,
**characterized in that** the threaded spindle (17) is of a multi-part design.

32. Actuating unit as claimed in any one of the preceding claims 18 to 31,
**characterized in that** the threaded nut (16) at its end remote from the first friction lining (4) includes a projection which is movable into abutment with a stop that is provided on the threaded spindle (17) and acts in a circumferential direction.

33. Actuating unit as claimed in any one of the preceding claims,
**characterized in that** the electric motor (11) is configured as an electronically commutated electric motor energized by a permanent magnet.

34. Actuating unit as claimed in any one of the preceding claims 1 to 32,
**characterized in that** the electric motor is configured as a switched reluctance motor.

35. Actuating unit as claimed in any one of the preceding claims,
**characterized in that** there is provision of a position detection system (46) which permits detecting the position of the rotor (11).

36. Actuating unit as claimed in claim 35,
**characterized in that** the position detection system (46) includes a Hall sensor.

37. Actuating unit as claimed in claim 35,
**characterized in that** the position detection system (46) includes a magnetoresistive element.

## Revendications

1. Unité d'actionnement d'un frein à disque de véhicule automobile, à actionnement électromécanique, qui est disposée sur une selle de frein dans laquelle sont disposées, de manière à pouvoir coulisser dans une mesure limitée, deux garnitures de friction (4, 5) coopérant chacune avec une face latérale d'un disque de frein (6), l'une (4) des garnitures de friction (4, 5) pouvant être amenée en prise avec le disque de frein (6), au moyen d'un élément d'actionnement (15), directement par l'unité d'actionnement et l'autre garniture de friction (5) par l'action d'une force de réaction appliquée par la selle de frein, l'unité d'actionnement étant constituée d'un moteur électrique (10) ainsi que d'un démultiplicateur (2) disposé quant à ses effets entre le moteur électrique (10) et l'élément d'actionnement (15), et une roue libre (35), en liaison active avec le moteur électrique (10) étant prévue, qui remplit la fonction d'un frein de stationnement, **caractérisée en ce que** la roue libre (35) est conçue de manière que son effet de serrage soit garanti par une transmission par complémentarité de formes du couple de rotation, et **en ce qu'**à l'état actionné elle empêche un mouvement de rotation d'un palier (24) dans lequel est supporté le rotor (11) du moteur électrique (10).

2. Unité d'actionnement selon la revendication 1, **caractérisée en ce que** la roue libre (35) forme un ensemble avec le palier (24).

3. Unité d'actionnement selon la revendication 2, **caractérisée en ce que** la bague extérieure (36) comme la bague intérieure (37) du palier (24) sont prolongées d'un côté de manière à former une liaison par complémentarité de formes avec le corps de serrage (38) de la roue libre (35).

4. Unité d'actionnement selon la revendication 3, **caractérisée en ce que** la bague intérieure (37) du palier (24) présente un profilage (41) qui permet de recevoir par complémentarité de formes le corps de serrage (38), tandis que la bague extérieure (36) présente au moins un évidement radial (39) ainsi qu'une surface oblique ou rampe (40) s'y raccordant, qui, avec le profilage (41), délimite au moins une fente de serrage recevant le corps de serrage (38).

5. Unité d'actionnement selon la revendication 4, **caractérisée en ce que** le corps de serrage (38) est précontraint au moyen d'un élément à ressort (42) en direction de l'évidement (39).

6. Unité d'actionnement selon la revendication 5, **caractérisée en ce que** l'élément à ressort (42) est réalisé comme joint élastique.

7. Unité d'actionnement selon la revendication 5, **caractérisée en ce que** l'élément à ressort est réalisé comme ressort à lame.

8. Unité d'actionnement selon l'une des revendications 1 à 7, **caractérisée en ce que** la roue libre (35) peut être actionnée au moyen d'un dispositif d'actionnement (43) électromagnétique.

9. Unité d'actionnement selon la revendication 8, **caractérisée en ce que** le dispositif d'actionnement électromagnétique (43) est constitué d'un électro-aimant (44) ainsi que d'un poussoir (45) qui peut être amené en engagement transmettant les forces avec le corps de serrage (38).

10. Unité d'actionnement selon la revendication 9, **caractérisée en ce que** l'électro-aimant (44) est réalisé comme électro-aimant bistable.

11. Unité d'actionnement selon l'une des revendications précédentes, **caractérisée en ce que** le corps de serrage (38) est réalisé comme galet de serrage.

12. Unité d'actionnement selon l'une des revendications précédentes, **caractérisée en ce que** le corps de serrage est réalisé en forme sphérique.

13. Unité d'actionnement selon l'une des revendications précédentes, **caractérisée en ce que** le palier (24) est réalisé comme palier de roulement à billes, à aiguilles ou à rouleaux.

14. Unité d'actionnement selon l'une des revendications précédentes, **caractérisée en ce qu'**un deuxième démultiplicateur (3) est prévu entre le moteur électrique (11) et le démultiplicateur (2).

15. Unité d'actionnement selon la revendication 14, **caractérisé en ce que** le moteur électrique (11), le (premier) démultiplicateur (2) ainsi que le deuxième démultiplicateur (3) sont réalisés comme au moins deux ensembles pouvant être manipulés séparément.

16. Unité d'actionnement selon la revendication 14, **caractérisée en ce que** le moteur électrique (11), le (premier) démultiplicateur (2) ainsi que le deuxième démultiplicateur (3) sont réalisés chacun comme un ensemble pouvant être manipulé de manière autonome.

17. Unité d'actionnement selon l'une des revendications précédentes, **caractérisée en ce que** le (premier) démultiplicateur (2) est réalisé comme mécanisme à vis et billes (16-18).

18. Unité d'actionnement selon la revendication 17, **caractérisée en ce que** l'élément d'actionnement (7) est formé par l'écrou de vis (16) du mécanisme à vis et billes (16-18).

19. Unité d'actionnement selon l'une des revendications précédentes, **caractérisée en ce que** le deuxième démultiplicateur (3) est disposé sur le côté du moteur électrique (10) tourné à l'opposé des garnitures de frein (4, 5).

20. Unité d'actionnement selon l'une des revendications 14 à 19 précédentes, **caractérisée en ce que** le deuxième démultiplicateur (3) est réalisé comme engrenage planétaire.

21. Unité d'actionnement selon la revendication 20, **caractérisée en ce que** le deuxième démultiplicateur (3) est réalisé comme engrenage planétaire avec roues planétaires (31, 32) étagées.

22. Unité d'actionnement selon l'une des revendications 17 à 20, **caractérisée en ce qu'**il est prévu une partie de guidage (12), entourant l'écrou de vis (16) du mécanisme à vis et billes (16-18), qui prend appui sur le carter de transmission (15) recevant le mécanisme à vis et billes et sur lequel la broche filetée (17)prend appui axialement de son côté.

23. Unité d'actionnement selon la revendication 22, **caractérisée en ce que** l'appui axial de la broche filetée (17) s'effectue par interposition d'un palier axial (26), au moyen d'un épaulement radial (14).

24. Unité d'actionnement selon la revendication 22 ou 23, **caractérisée en ce que** des éléments de mesure de la force sont prévus sur la partie de guidage.

25. Unité d'actionnement selon l'une des revendications 17 à 24 précédentes, **caractérisée en ce qu'**une garniture d'étanchéité élastique (27) est prévue entre l'écrou de vis (16) et la partie de guidage (12).

26. Unité d'actionnement selon l'une des revendications 20 à 25, **caractérisée en ce que** la roue solaire (30) de l'engrenage planétaire est réalisée sur le rotor (11), tandis que les roues satellites (31, 32) sont montées dans une cage planétaire (34) en liaison avec la broche filetée (17) de manière à transmettre les forces, et sont constituées chacune d'une première roue satellite (31a, 32a) de plus grand diamètre, en prise avec la roue solaire (30), ainsi que d'une deuxième roue satellite (31b, 32b) de plus petit diamètre, en prise avec une roue creuse (33).

27. Unité d'actionnement selon l'une des revendications 20 à 26, **caractérisée en ce que** la roue creuse (33) de l'engrenage planétaire est formée par une denture intérieure qui est réalisée dans un couvercle (23) lequel forme un carter pour l'engrenage planétaire et est disposé sur le carter moteur (8) du moteur électrique (10).

28. Unité d'actionnement selon l'une des revendications 20 à 27, **caractérisée en ce que** la transmission des forces entre la cage planétaire (34) et la broche filetée (17) s'effectue au moyen d'une liaison à enfichage par complémentarité de formes.

29. Unité d'actionnement selon l'une des revendications 20 à 28, **caractérisée en ce que** la cage planétaire (34) est montée dans le couvercle (23) au moyen d'un palier radial (50).

30. Unité d'actionnement selon la revendication 28 ou 29, **caractérisée en ce que** la liaison à enfichage par complémentarité de formes est couplée à la cage planétaire (34) de manière rigide en torsion, souple à la flexion et de façon à céder radialement.

31. Unité d'actionnement selon l'une des revendications 18 à 30 précédentes, **caractérisée en ce que** la broche filetée (17) est réalisée en plusieurs parties.

32. Unité d'actionnement selon l'une des revendications 18 à 31 précédentes, **caractérisée en ce que** l'écrou de vis (16) est pourvu, à son extrémité tournée à l'opposé de la première garniture de friction (4), d'une saillie qui peut être amenée en contact avec une butée, agissant dans la direction périphérique, réalisée sur la broche filetée (17).

33. Unité d'actionnement selon l'une des revendications précédentes, **caractérisée en ce que** le moteur électrique (11) est réalisé comme moteur électrique excité par aimant permanent et commuté de manière électronique.

34. Unité d'actionnement selon l'une des revendications 1 à 32 précédentes, **caractérisée en ce que** le moteur électrique est réalisé comme moteur à réluctance commandée.

35. Unité d'actionnement selon l'une des revendications précédentes, **caractérisée en ce qu'**il est prévu un système de reconnaissance de position (46) qui permet de reconnaître la position du rotor (11).

36. Unité d'actionnement selon la revendication 35, **caractérisée en ce que** le système de reconnaissance de position (46) comporte un capteur de Hall.

37. Unité d'actionnement selon la revendication 35, **caractérisée en ce que** le système de reconnaissance de position (46) comporte un élément magnétorésistif.
